# EUROPÄISCHE PATENTANMELDUNG

(11) **EP 3 595 135 A1**
(43) Veröffentlichungstag der Anmeldung: **15.01.2020**
(21) Anmeldenummer: 18183444.1
(22) Anmeldetag: 13.07.2018
(51) Int. Cl.: H02K 1/24, H02K 15/02, H02K 1/02, H02K 1/04, H02K 15/12

(54) **LEISTUNGSFÄHIGE BZW. SCHNELLLAUFENDE DYNAMOELEKTRISCHE ROTATORISCHE MASCHINE**

(71) Anmelder: Siemens Aktiengesellschaft, 80333 München (DE)
(72) Erfinder: Vollmer, Rolf, 36129 Gersfeld (DE)

(57) **Zusammenfassung**

Die Erfindung betrifft eine leichtgewichtige dynamoelektrische rotatorische Maschine (15), aufweisend eine Leistung pro Masse von > 5 kW/kg, einen Wirkungsgrad von > 95%, einen Rotor (11) mit einer Mehrzahl an übereinander angeordneten Materiallagen (1), wobei die Mehrzahl an Materiallagen (1) eine Verlustleistung von < 11,5 W/kg aufweist, wobei die Materiallagen (1) jeweils eine Zugfestigkeit von > 600 MPa aufweisen, wobei die Materiallagen (1) jeweils eine Lagendicke (d) zwischen 0,5 und 500 µm aufweisen und mittels eines additiven Herstellungsverfahrens gefertigt sind. Die Erfindung betrifft zudem eine schnelllaufende dynamoelektrische rotatorische Maschine (15), aufweisend eine Leistung pro Masse von > 5 kW/kg und einen Rotor (11), wobei mit dem Rotor (11) eine Rotoroberflächengeschwindigkeit von > 150 m/s erreichbar ist und wobei der Rotor (11) eine Mehrzahl an übereinander angeordneten Materiallagen (1) aufweist, wobei die Materiallagen (1) jeweils eine Lagendicke (d) zwischen 0,5 und 500 µm aufweisen und mittels eines additiven Herstellungsverfahrens gefertigt sind.

## Beschreibung

Die Erfindung betrifft eine leichtgewichtige bzw. schnelllaufende dynamoelektrische rotatorische Maschine.

Dynamoelektrische rotatorische Maschinen sind seit vielen Jahren in unterschiedlichen Ausführungen bekannt und haben sich sowohl im motorischen als auch im generatorischen Betrieb im praktischen Einsatz bewährt.

Je nach Anwendung werden sie im Rahmen bisheriger technischer Grenzen unter anderem für eine gewünschte Leistung und Drehzahl, ein gewünschtes Drehmoment und dynamisches Verhalten, verfügbaren Bauraum und bereitgestellte elektrische Energie modifiziert. Es sind zudem verschiedene Ausführungsformen von dynamoelektrischen rotatorischen Maschinen bekannt. Es gibt Maschinen mit permanentmagnetischer oder elektromagnetischer Erregung. Sie können mit Gleichstrom, ein- oder mehrphasigem Wechselstrom gespeist werden, mit elektronischer oder mechanischer Kommutierung ausgeführt sein und als Asynchronmaschine oder Synchronmaschine gebaut sein.

Doch gerade in den Bereichen Elektromobilität und Luftfahrt werden derart hohe Anforderungen an elektrische Maschinen gestellt, die mit bisherigen Bauweisen nicht erreichbar sind.

Besonders für sogenannte Elektroflugzeuge der Luftfahrzeugindustrie werden ultraleichte, aber dennoch leistungsstarke Elektromotoren benötigt, also Elektromotoren mit einer niedrigen Masse und einem sehr hohen Wirkungsgrad. Je nach Anwendung können die Anforderungen bezüglich hohem Drehmoment und hoher Drehzahl jedoch differieren.

Die Patentschrift EP 2720945 A1 offenbart hierzu eine Antriebsvorrichtung für ein Luftfahrzeug, die mindestens eine Batterie zur Speicherung elektrischer Energie, einen Elektromotor zum Antrieb eines Propellers, ein Leitungsmittel zum Übertragen der elektrischen Energie von der Batterie an den Elektromotor und ein erstes Steuermittel zur Steuerung des Elektromotors umfasst. Der Elektromotor ist ein Hochtemperatur-Supraleiter-Motor.

Jedoch ist insbesondere eine Kühlung eines supraleitenden Motors aufwendig und teuer, denn der Effekt der Supraleitung tritt erst bei niedrigen Temperaturen auf. Es müssen zudem Materialien für den Elektromotor genutzt werden, die diesen niedrigen Temperaturen standhalten, spezielle Kühlmittel eingesetzt werden und der Elektromotor aufwendig von einem Wärmeeintrag der Umgebung abgeschirmt werden.

Der Erfindung liegt daher die Aufgabe zugrunde, einen Elektromotor, insbesondere für den Antrieb eines Luftfahrzeugs, zu verbessern.

Die Lösung der Aufgabe gelingt durch Anspruch 1, d. h. eine leichtgewichtige dynamoelektrische rotatorische Maschine, aufweisend eine Leistung pro Masse von > 5 kW/kg, einen Wirkungsgrad von > 95%, einen Rotor mit einer Mehrzahl an übereinander angeordneten Materiallagen, wobei die Mehrzahl an Materiallagen (1) eine Verlustleistung von < 11,5 W/kg aufweist, wobei die Materiallagen jeweils eine Zugfestigkeit von > 600 MPa aufweisen, wobei die Materiallagen jeweils eine Lagendicke zwischen 0,5 und 500 µm aufweisen und mittels eines additiven Herstellungsverfahrens gefertigt sind.

Die Verlustleistung wird vorzugsweise bei 400 Hz und 1,0 T in einer einem Fachmann bekannten Weise gemessen. Die Leistung pro Masse wird auf eine dem Fachmann bekannte Weise gemessen. Der Wirkungsgrad wird in einer dem Fachmann bekannten Weise, insbesondere basierend auf zugeführter elektrischer Leistung und abgegebener mechanischer Leistung, bestimmt. Für eine Messung der Lagendicke werden übliche Messmethoden herangezogen.

Die hohe Leistung pro Masse bei gleichzeitig hohem Wirkungsgrad wird durch die dünnen Materiallagen erreicht, da sich die dünnen Materiallagen positiv auf Wirbelstromverluste auswirken. Dies wird später noch genauer erläutert.

Ferner gelingt die Lösung der Aufgabe durch Anspruch 2, d. h. eine schnelllaufende dynamoelektrische rotatorische Maschine, aufweisend eine Leistung pro Masse von > 5 kW/kg, einen Rotor, wobei mit dem Rotor eine Rotoroberflächengeschwindigkeit von > 150 m/s erreichbar ist und wobei der Rotor eine Mehrzahl an übereinander angeordneten Materiallagen aufweist, wobei die Materiallagen jeweils eine Lagendicke zwischen 0,5 und 500 µm aufweisen und mittels eines additiven Herstellungsverfahrens gefertigt sind.

Für eine Messung der Rotoroberflächengeschwindigkeit werden übliche Messmethoden herangezogen.

Die hohe Leistung pro Masse und die hohe Rotoroberflächengeschwindigkeit werden durch die dünnen Materiallagen erreicht. Dies wird später noch genauer erläutert.

Ein Antrieb aufweisend eine leichtgewichtige dynamoelektrische rotatorische Maschine und/oder eine schnelllaufende dynamoelektrische rotatorische Maschine ist vorteilhaft einsetzbar in beispielsweise Luftfahrzeugen, Straßenfahrzeugen und Schienenfahrzeugen.

Der Antrieb ist hierbei vorzugsweise wenigstens eine vorgenannte Maschine verbunden mit einer Regelungseinheit und/oder einer Umrichtereinheit und/oder einem Getriebe und/oder einer Einheit zur Versorgung mit elektrischer Energie, beispielsweise ein Anschluss an ein Energieversorgungsnetz und/oder eine Batterie.

Die Erfindung kann jedoch in allen Bereichen eingesetzt werden, die eine dynamoelektrische rotatorische Maschine erfordern, insbesondere in jenen Bereichen, die eine leichtgewichtige dynamoelektrische rotatorische Maschine und/oder eine schnelllaufende dynamoelektrische rotatorische Maschine erfordern. Hierzu zählen beispielsweise: Turbomaschinen, Propeller, insbesondere für Luftfahrzeuge (z. B. Flugzeuge, Drohnen, Hubschrauber), Turbinen, insbesondere für Luftfahrzeuge, Bohrer, Werkzeugmaschinen, Fräsmaschinen und Schleifmaschinen.

Die Erfindung kann auch für zwei-, drei-, vier- oder mehrrädrige Kraftfahrzeuge aller Art (z. B. Automobile, Omnibusse, Motorräder), insbesondere für Rennfahrzeuge der Formel E, und schienengebundene Fahrzeuge verwendet werden.

Es sind jedoch auch andere Anwendungsgebiete denkbar. Weitere vorteilhafte Ausführungsformen ergeben sich aus den Unteransprüchen.

Die leichtgewichtige dynamoelektrische rotatorische Maschine kann als getriebelose Maschine ausgeführt sein und eine gewisse Drehmomentdichte und somit ein gewünschtes Drehmoment bereitstellen.

Vorzugsweise ist die leichtgewichtige dynamoelektrische rotatorische Maschine jedoch an ein Getriebe angebunden, welches das benötigte Drehmoment bietet. Diese Ausführungsform ist insgesamt leichter als eine getriebelose Maschine.

Die schnelllaufende dynamoelektrische rotatorische Maschine kann getriebelos ausgeführt sein und eine gewisse Drehzahl bereitstellen. Vorzugsweise ist die schnelllaufende dynamoelektrische rotatorische Maschine jedoch an ein Getriebe angebunden.

Der Vorteil der beschriebenen Maschine ist, dass eine hohe massebezogene Leistung bei hohem Wirkungsgrad erreichbar ist.

Die hohe Leistung pro Masse der Maschine (Maschine steht sowohl für die leichtgewichtige dynamoelektrische rotatorische Maschine als auch für die schnelllaufende dynamoelektrische rotatorische Maschine) ist erreichbar, da eine Verlustleistung in den Materiallagen gering ist.

Die Mehrzahl an Materiallagen ist vorzugsweise in Richtung einer Rotationsachse übereinander angeordnet. Jedoch ist auch eine andere Anordnung möglich.

Zum magnetischen Kreis der dynamoelektrischen rotatorischen Maschine gehören ein Stator und ein Rotor. Der Rotor und der Stator stellen die leistungserzeugenden Komponenten, auch Aktivteile genannt, der dynamoelektrischen rotatorischen Maschine dar. Der Rotor weist erfindungsgemäß übereinander angeordnete Materiallagen auf, wobei die Materiallagen mittels eines additiven Herstellungsverfahrens gefertigt sind. Die additive Herstellung ermöglicht die genannte Lagendicke zwischen 0,5 und 500 µm. Die Materiallagen sind dünner als konventionell aus gewalzten Großblechen gestanzte Bleche, die gestapelt und/oder paketiert ein konventionelles Blechpaket für einen Rotor bilden.

Die Materiallage hat vorteilhaft die bisherigen Funktionen eines Blechs in einem Rotor-Blechpaket inne und nimmt die Aufgaben eines Blechs wahr.

Vorteilhaft entspricht ein Umriss der Materiallage im Wesentlichen dem Umriss eines Blechs.

Ein Materiallagenfüge weist eine Mehrzahl an übereinander angeordneten Materiallagen auf.

Das Materiallagengefüge hat vorteilhaft die bisherigen Funktionen eines Rotor-Blechpakets inne und nimmt die Aufgaben eines Rotor-Blechpakets wahr.

In einer weiteren vorteilhaften Ausführungsform der Erfindung weist die Maschine eine Leistung pro Masse von > 10 kW/kg auf.

Die leichtgewichtige bzw. schnelllaufende dynamoelektrische rotatorische Maschine weist vorzugsweise eine Maximalleistung pro Masse von 13 kW/kg (bei einem Wirkungsrad von mindestens 97%) auf.

Mit dem Rotor der schnelllaufenden dynamoelektrischen rotatorischen Maschine ist beispielsweise eine Maximalrotoroberflächengeschwindigkeit von 500 m/s (insbesondere bei Materiallagen, welche ein Material mit einer Dichte von ca. 7,7 kg/dm³ aufweisen, z. B. Stahl) erreichbar.

In einer weiteren vorteilhaften Ausführungsform der Erfindung ist mit dem Rotor eine Rotoroberflächengeschwindigkeit von > 200 m/s erreichbar.

In einer weiteren vorteilhaften Ausführungsform der Erfindung weisen die Materiallagen eine Lagendicke zwischen 10 und 100 µm auf.

Diese Ausführungsform gewährleistet eine stabile Materiallage.

In einer weiteren vorteilhaften Ausführungsform der Erfindung sind die Materiallagen mittels Schablonendruck und Sinterung gefertigt.

Für den Schablonendruck wird vorzugsweise eine Schablone verwendet. Die Schablone ist vorzugsweise eine Vorlage zum Übertragen einer gewünschten Form und/oder Aussparung und/oder eines gewünschten Umrisses und/oder Musters etc. Die Schablone kann beliebig oft verwendet werden.

Mittels der Schablone kann genau die Form der Materiallage gebildet werden, die gewünscht ist. So entsteht kein Abfall.

Es können auch zwei oder mehr Schablonen für eine Materiallage verwendet werden.

Der Schablonendruck ist ein additives Herstellungsverfahren und weist vorzugsweise folgende Schritte auf:
- Aufbringen einer Suspension, aufweisend wenigstens ein Bindemittel und Festteilchen, durch die Schablone auf eine Grundfläche zum Erhalt eines Grünkörpers,
- Austreiben des Bindemittels aus dem Grünkörper, insbesondere mittels Entbinderung,
- Schaffen eines dauerhaften Zusammenhalts der Festteilchen durch Erwärmung und/oder mittels Verdichtung, insbesondere mittels Sinterung.

Die Materiallage ist vorzugsweise durch Sinterung, in anderen Worten: durch Erwärmung und/oder Verdichtung, einstückig.

In einer weiteren vorteilhaften Ausführungsform der Erfindung weisen die Materiallagen auf wenigstens einer Lagenseite ein Isolationsmaterial auf.

In einer weiteren vorteilhaften Ausführungsform der Erfindung weisen die Materiallagen auf beiden Lagenseiten ein Isolationsmaterial auf.

In einer weiteren vorteilhaften Ausführungsform der Erfindung weisen die Materiallagen eine Lackierung auf.

In einer weiteren vorteilhaften Ausführungsform der Erfindung weisen die Materiallagen als Lackierung Backlack auf.

In einer weiteren vorteilhaften Ausführungsform der Erfindung ist das Isolationsmaterial die Lackierung.

Die Materiallage und das Isolationsmaterial und/oder die Lackierung sind vorzugsweise stoffschlüssig verbunden.

Da die Materiallagen nur eine sehr geringe Lagendicke aufweisen, werden Wirbelstromverluste deutlich reduziert. Denn ein Wirbelstrom kann sich nur innerhalb der Lagendicke der Materiallage ausbilden, wodurch bei derart dünnen Materiallagen die Wirbelstromstärke erheblich reduziert ist.

Die Isolation zwischen den einzelnen Materiallagen verhindert, dass sich die Wirbelströme zu großen, verlustreichen Wirbelströmen überlagern können.

Dies bringt unter anderem folgenden Vorteil mit sich: Innerhalb einer Wärmeklasse und bei gleicher Drehzahl erwärmt sich eine Maschine mit einem Materiallagengefüge-Rotor weniger als eine konventionelle Maschine mit einem Blechpaket-Rotor. In anderen Worten: Bei gleicher Drehzahl ist eine Maschine mit einem Materiallagengefüge-Rotor kühler als eine Maschine mit einem Blechpaket-Rotor.

Die Drehzahl kann somit erhöht werden, bis die maximal zulässige Temperatur der jeweiligen Wärmeklasse erreicht ist. Die bereitgestellte Leistung ist also höher. Gemäß P ∼ M·n erhöht sich bei konstantem Drehmoment M die Leistung P proportional mit der Drehzahl n.

Im Umkehrschluss bedeutet dies: Soll die Maschine eine bestimmte Leistung bereitstellen, kann bei einer Maschine mit Materiallagengefüge-Rotor eine geringere Wärmeklasse genutzt werden als bei einer Maschine mit Blechpaket-Rotor. Dadurch können Kosten gesenkt werden, insbesondere für Isolationsmaterialien und Kühlung.

Die Ausführungen gelten auch für einen Zusammenhang zwischen Wärmeklasse und Drehmoment. Innerhalb einer Wärmeklasse und bei gleichem Drehmoment erwärmt sich eine Maschine mit einem Materiallagengefüge-Rotor weniger als eine konventionelle Maschine mit einem Blechpaket-Rotor. In anderen Worten: Bei gleichem Drehmoment ist eine Maschine mit einem Materiallagengefüge-Rotor kühler als eine Maschine mit einem Blechpaket-Rotor.

Derart dünne Materiallagen können nicht - wie konventionelle Bleche - aus gewalzten Großblechen aus weichmagnetischem Material herausgeschnitten bzw. gestanzt werden. Bei einer konventionellen Fertigung von Großblechen durch Walzen können keine Großbleche gefertigt werden, die dünner als 100 µm sind.

Mittels der additiven Herstellung sind jedoch die bereits beschriebenen dünnen Materiallagen herstellbar.

Zudem entfällt bei der additiven Herstellung der beim Herausschneiden bzw. Stanzen der Bleche aus den Großblechen übliche unvermeidliche Abfall. Insbesondere beim bereits beschriebenen vorteilhaften Schablonendruck fällt kein Abfall an.

In einer alternativen Ausführungsform zur Lackierung ist das Isolationsmaterial Keramik, vorzugsweise Oxidkeramik wegen eines hohen elektrischen Widerstands, beispielsweise Aluminiumoxid, Magnesiumoxid, Zirkoniumoxid und/oder Titandioxid. Siliciumcarbid, Siliciumnitrid, Borcarbid, Bornitrid und/oder Aluminiumnitrid sind auch möglich. Auch andere Materialien, wie z. B. Gläser oder Glaskeramik, sind denkbar.

In einer weiteren vorteilhaften Ausführungsform der Erfindung ist eine Materiallage mittels der Lackierung und/oder mittels des Isolationsmaterials mit wenigstens einer weiteren Materiallage verfestigbar.

Die Materiallage ist vorzugsweise mit einer benachbarten Materiallage bzw. den benachbarten Materiallagen verfestigbar.

Die vorteilhaft Backlack aufweisenden Materiallagen werden zur Bildung des Rotors übereinander angeordnet und vorzugsweise mittels Druck und Wärme miteinander verklebt. Dies wird auch Verbacken genannt. Durch Druck und Wärme wird der Backlack weich, klebt die Materiallagen aneinander und härtet aus. Dies hat gegenüber anderen Verbindungsmöglichkeiten wie Schweißen, Stanzpaketieren und Nieten den Vorteil, dass die Materiallagen keine werkstoffschädigenden Kontaktstellen aufweisen. Zudem wird ein Magnetfluss nicht gestört und es entstehen keine Materialspannungen und Materialverformungen.

Der vorteilhaft aufgebrachte Backlack ermöglicht eine hohe Festigkeit wenigstens zweier gegenseitig verfestigter Materiallagen, da die Materiallagen flächig verbunden sind. Dies reduziert Vibrationen und Geräusche.

In einer weiteren vorteilhaften Ausführungsform der Erfindung weisen die Materiallagen magnetisches Material auf.

Vorzugsweise ist das magnetisch leitfähige Material ein ferromagnetisches Material.

In einer weiteren vorteilhaften Ausführungsform der Erfindung weisen die Materiallagen amorphes magnetisches und/oder anisotropes magnetisches Material auf.

Materiallagen mit amorphem magnetischem Material weisen eine unregelmäßige Struktur auf.

Materiallagen mit anisotropem magnetischem Material weisen eine Vorzugsrichtung für eine Magnetisierung auf.

Amorphes magnetisches Material, insbesondere amorphes Eisen, ermöglicht eine Senkung der Verluste, wodurch die Leistung pro Masse und der Wirkungsgrad gesteigert werden können.

Anisotropes magnetisches Material, insbesondere anisotropes Eisen, ermöglicht eine Steigerung der Leistung pro Masse.

In einer weiteren vorteilhaften Ausführungsform der Erfindung weisen die Materiallagen weichmagnetisches Material auf.

Beispielsweise ist das weichmagnetische Material Eisen, Nickel, Kobalt und/oder deren Legierungen. Es sind jedoch auch andere magnetisch leitfähige Materialien denkbar.

In einer weiteren vorteilhaften Ausführungsform der Erfindung weist die leichtgewichtige bzw. schnelllaufende dynamoelektrische rotatorische Maschine einen Stator auf, wobei der Stator eine Mehrzahl an übereinander angeordneten Stator-Materiallagen aufweist, wobei die Stator-Materiallagen jeweils eine Lagendicke zwischen 0,5 und 500 µm aufweisen und mittels eines additiven Herstellungsverfahrens gefertigt sind.

In einer weiteren vorteilhaften Ausführungsform der Erfindung weisen die Stator-Materiallagen eine Zugfestigkeit und eine Verlustleistung auf, wobei die Zugfestigkeit der Stator-Materiallagen geringer ist als eine Zugfestigkeit von Rotor-Materiallagen, wobei die Verlustleistung der Mehrzahl an Stator-Materiallagen geringer ist als eine Verlustleistung der Mehrzahl an Rotor-Materiallagen.

Die Stator-Materiallagen sind wie die Rotor-Materiallagen vorzugsweise mittels Schablonendruck und Sinterung gefertigt. Jedoch ist auch eine andere Fertigung möglich.

Die Stator-Materiallagen weisen wie die Rotor-Materiallagen vorzugsweise auf wenigstens einer Stator-Lagenseite, vorzugsweise auf beiden Stator-Lagenseiten, Isolationsmaterial auf.

Die Stator-Materiallagen weisen wie die Rotor-Materiallagen vorzugsweise auf wenigstens einer Stator-Lagenseite, vorzugsweise auf beiden Stator-Lagenseiten, eine Lackierung, insbesondere Backlack, auf.

Eine Stator-Materiallage ist wie die Rotor-Materiallage vorzugsweise mittels der Lackierung und/oder mittels des Isolationsmaterials mit wenigstens einer weiteren Stator- Materiallage verfestigbar.

Die Stator-Materiallagen weisen wie die Rotor-Materiallagen vorzugsweise magnetisches Material, insbesondere amorphes magnetisches und/oder anisotropes magnetisches Material, auf.

Die Stator-Materiallagen weisen wie die Rotor-Materiallagen vorzugsweise weichmagnetisches Material auf.

Die Stator-Materiallage hat vorteilhaft die bisherigen Funktionen eines Blechs in einem Stator-Blechpaket inne und nimmt die Aufgaben des Blechs wahr. Vorteilhaft entspricht ein Umriss der Stator-Materiallage im Wesentlichen dem Umriss des Blechs. Ein Stator-Materiallagenfüge weist eine Mehrzahl an übereinander angeordneten Stator-Materiallagen auf. Das Stator-Materiallagengefüge hat vorteilhaft die bisherigen Funktionen eines Stator-Blechpakets inne und nimmt die Aufgaben eines Stator-Blechpakets wahr.

Die Erfindung bietet den Vorteil, dass verlustarme Maschinen, insbesondere Elektromotoren, gebaut werden können, die zugleich eine deutliche Volumen- und Gewichtsersparnis gegenüber klassischen Maschinen bringen.

Im Folgenden wird die Erfindung anhand der in den Ausführungsbeispielen dargestellten Figuren näher beschrieben und erläutert. Es zeigen:
- FIG 1: eine Seitenansicht einer erfindungsgemäßen dynamoelektrischen rotatorische Maschine,
- FIG 2: den Rotor der dynamoelektrischen rotatorischen Maschine,
- FIG 3: ein vorteilhaftes Verfahren zur Herstellung einer Materiallage mit einer Lagendicke zwischen 0,5 und 500 µm,
- FIG 4: die Materiallage,
- FIG 5: die Materiallage in einer Seitenansicht und
- FIG 6: ein Verfahren zur Herstellung eines Materiallagengefüges für den Rotor der dynamoelektrischen rotatorischen Maschine.

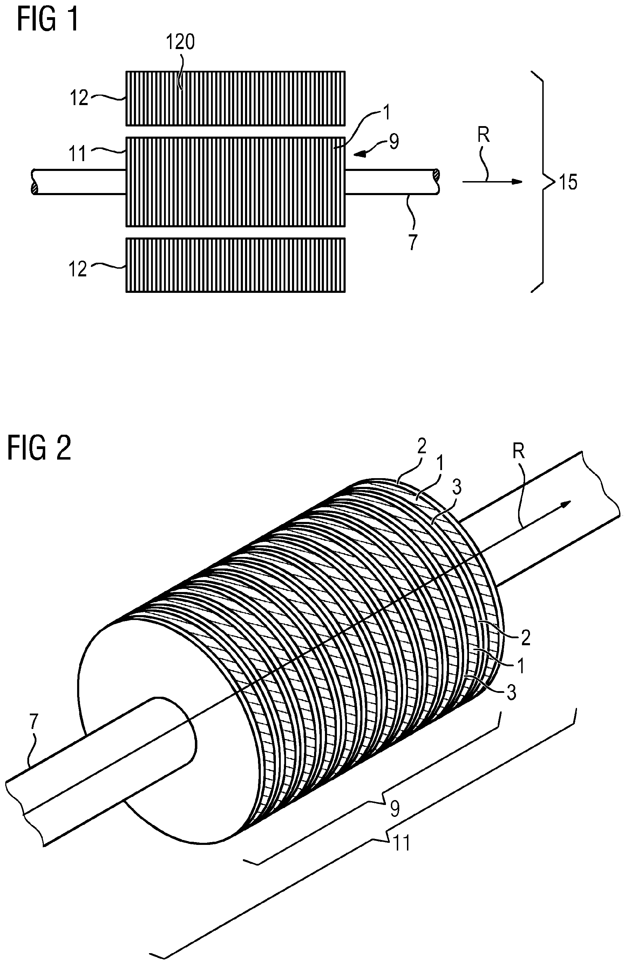

FIG 1 zeigt eine Seitenansicht einer erfindungsgemäßen dynamoelektrischen rotatorischen Maschine 15. Die Maschine 15 kann sowohl eine leichtgewichtige dynamoelektrische rotatorische Maschine als auch eine schnelllaufende dynamoelektrische rotatorische Maschine sein.

Die Maschine 15 weist einen Rotor 11 auf, welcher eine Welle 7 und ein Materiallagengefüge 9 umfasst. Das Materiallagengefüge weist eine Mehrzahl an übereinander angeordneten Materiallagen 1 auf, wobei die Materiallagen 1 jeweils eine Lagendicke zwischen 0,5 und 500 µm aufweisen und mittels eines additiven Herstellungsverfahrens gefertigt sind. Die Materiallagen 1 sind als Rotor-Materiallagen dargestellt.

In der Figur ist die Mehrzahl an Materiallagen in Richtung einer Rotationsachse R übereinander angeordnet. Jedoch ist auch eine Anordnung parallel zur Rotationsachse möglich.

Der Rotor 11 kann in der Figur in einem Stator 12 gemäß der Rotationsachse R rotieren.

Der Stator 12 weist eine Mehrzahl an übereinander angeordneten Stator-Materiallagen 120 (entspricht vorzugsweise einem Stator-Materiallagengefüge) auf.

Eine beispielhafte Maschine weist eine Leistung zwischen 250 und 350 kW, insbesondere 300 kW, eine Leistung pro Masse zwischen 5 und 8 kW/kg, insbesondere 6 kW/kg, eine Drehzahl zwischen 20000 und 30000 min⁻¹, insbesondere 22500 min⁻¹, und einen Wirkungsgrad zwischen 95 und 99%, insbesondere 97%, auf.

Die beschriebenen Bezugszeichen sind auch für die folgenden Figuren gültig, sofern sie in den Ausführungsbeispielen vorhanden sind, und werden aus Übersichtsgründen nicht erneut erläutert.

FIG 2 zeigt den Rotor 11 der dynamoelektrischen rotatorischen Maschine.

Der Rotor 11 weist das Materiallagengefüge 9 auf. Das Materiallagengefüge 9 umfasst eine Mehrzahl an entlang der Rotationsachse R übereinander angeordneten Materiallagen 1.

Das Materiallagengefüge 9 ist an die Welle 7 angebunden.

Die Materiallage 1 ist in der Figur mit wenigstens einer weiteren Materiallage verfestigt. Die Figur zeigt eine Mehrzahl an miteinander verfestigten Materiallagen 1.

Jede Materiallage 1 weist vorzugsweise auf wenigstens einer Lagenseite ein Isolationsmaterial auf. Die Figur zeigt eine Ausführung, wonach jede Materiallage 1 auf beiden Lagenseiten ein Isolationsmaterial 2, 3 aufweist. Das Isolationsmaterial 2, 3 ist in der Figur Lack, insbesondere Backlack. Dies entspricht einer bevorzugten Ausführung.

Die Verfestigung gelingt in der Figur durch den aufgebrachten Backlack 2, 3, da dieser auf einfache Weise aufgebracht werden kann. Ein vornehmlich anschließendes Verbacken der Materiallagen 1 schafft eine stabile und robuste Verbindung.

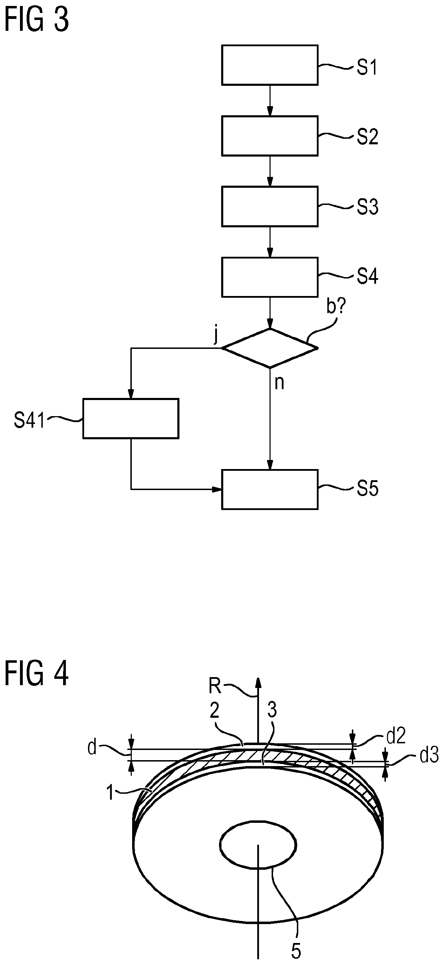

FIG 3 zeigt ein vorteilhaftes Verfahren zur Herstellung der Materiallage mit einer Lagendicke zwischen 0,5 und 500 µm. Das Verfahren zur Herstellung ist ein additives Herstellungsverfahren.

Vorzugsweise beträgt die Lagendicke zwischen 10 und 100 µm.

In einem Verfahrensschritt S1 wird eine Suspension, aufweisend wenigstens ein Bindemittel und Festteilchen, durch eine Schablone auf eine Grundfläche zum Erhalt eines Grünkörpers aufgebracht.

Aufgebracht bedeutet hierbei vorzugsweise: Auf die Grundfläche wird die Suspension mit einer Rakel aufgebracht.

Die Suspension weist wenigstens ein, insbesondere mittels Entbinderung, austreibbares Bindemittel und Festteilchen auf.

Die Festteilchen liegen vorzugsweise als Pulver vor. Ein Festteilchen umfasst vorzugsweise wenigstens ein magnetisch und/oder elektrisch leitfähiges Material, insbesondere Metall.

Vorzugsweise ist das magnetisch leitfähige Material ein ferromagnetisches Material, insbesondere weichmagnetisches Material.

Beispielsweise ist das weichmagnetische Material Eisen, Nickel, Kobalt und/oder deren Legierungen. Es sind jedoch auch andere magnetisch leitfähige Materialien denkbar.

Ein Festteilchen weist vorzugsweise im Wesentlichen einen Durchmesser zwischen 0,1 und 50 µm, insbesondere zwischen 0,5 und 10 µm, auf.

Je geringer der Durchmesser der Festteilchen ist, desto dünnere Materiallagen können hergestellt werden. Beispielsweise kann mittels einer Suspension, welche Festteilchen mit einem Durchmesser von 0,5 µm aufweist, eine 0,5 µm dünne Materiallage hergestellt werden.

Das Pulver kann Festteilchen ausschließlich eines Materials umfassen oder eine Pulvermischung umfassend wenigstens zwei unterschiedliche Materialien sein.

Die Suspension ist vorzugsweise strukturviskos. Dies hat den Vorteil, dass die Suspension während des Auftragens auf die Grundfläche zur Erzeugung des Grünkörpers, vorzugsweise mit der Rakel, weniger viskos ist und die gewünschte Form durch die Schablone optimal übertragen werden kann. Ist das Auftragen beendet, behält der Grünkörper die gewünschte Form bei.

In einem Verfahrensschritt S2 wird das Bindemittel aus dem Grünkörper, insbesondere mittels Entbinderung, ausgetrieben.

In einem Verfahrensschritt S3 wird ein dauerhafter Zusammenhalt der Festteilchen durch Erwärmung und/oder mittels Verdichtung, insbesondere mittels Sinterung, geschaffen.

Die Entbinderung erfolgt vorteilhaft bei Temperaturen um 300°C. Hierbei verdampfen vorzugsweise im Bindemittel vorhandene Kohlenwasserstoffe.

Die Sinterung erfolgt vorteilhaft in einem Temperaturbereich von 1200°C bis 1500°C.

In einem Verfahrensschritt S4 wird auf eine Lagenseite Isolationsmaterial aufgebracht.

Aufgebracht bedeutet hierbei vorzugsweise: Auf die Lagenseite wird Isolationsmaterial mit einer Rakel aufgebracht oder die Lagenseite wird mit einem Streichwerkzeug bestrichen oder die Lagenseite wird in ein das Isolationsmaterial beinhaltendes Gefäß eingetaucht.

Vorzugsweise ist das Isolationsmaterial Lack, insbesondere Backlack.

Es sind jedoch auch andere Isolationsmaterialien denkbar. Beispielsweise kann das Isolationsmaterial mittels einer keramischen Suspension, aufweisend wenigstens ein Bindemittel und Keramik-Festteilchen, auf die Lagenseite aufgebracht werden und das Bindemittel, insbesondere mittels Entbinderung, ausgetrieben werden. Die Keramik-Festteilchen liegen hierbei vorzugsweise als Keramik-Pulver vor.

Zudem besteht die Möglichkeit, ein Isolationsmaterial in einem nicht gezeigten Verfahrensschritt S4a aufzubringen und zusätzlich Lack, insbesondere Backlack, in einem nicht gezeigten Verfahrensschritt S4b aufzubringen. Die Verfahrensschritte S4a und S4b sind dann Teil des gezeigten Verfahrensschritts S4.

Wenn beide Lagenseiten mit Isolationsmaterial und/oder Lack versehen werden sollen - in der Figur mit b? und j gekennzeichnet - wird dies in einem Verfahrensschritt S41 bewerkstelligt.

Wenn nur eine Lagenseite mit Isolationsmaterial und/oder Lack versehen werden soll, wird im Verfahren mittels b? und n die Materiallage in einem Verfahrensschritt S5 fertiggestellt.

Der vorteilhaft aufgebrachte Backlack ermöglicht eine hohe Festigkeit des Materiallagengefüges, da die Materiallagen flächig verbunden sind. Dies reduziert auch Vibrationen und Geräusche.

Das Verfahren kann zur Fertigung der Rotor-Materiallage als auch zur Fertigung der Stator-Materiallage verwendet werden.

FIG 4 zeigt die Materiallage 1.

Die Materiallage 1 weist die Lagendicke d auf.

Vorzugsweise weist jede Materiallage 1 auf wenigstens einer Lagenseite das Isolationsmaterial 2, 3 auf. Die Figur zeigt eine Ausführung, wonach jede Materiallage 1 auf beiden Lagenseiten ein Isolationsmaterial 2, 3 aufweist. Das Isolationsmaterial ist in der Figur Lack, insbesondere Backlack. Dies entspricht einer bevorzugten Ausführung.

Die Materiallage 1 weist auf einer oberen Lagenseite Lack 2 mit einer Isolationsdicke d2 und auf einer unteren Lagenseite Lack 3 mit einer Isolationsdicke d3 auf.

Es ist auch möglich, dass die Materiallage 1 ein andersartiges Isolationsmaterial und zusätzlich Lack aufweist. Es ist auch möglich, dass die Materiallage 1 ein andersartiges Isolationsmaterial auf einer Lagenseite und Lack auf der anderen Lagenseite aufweist. Es ist auch möglich, dass die Materiallage 1 eine Mischform aus andersartigem Isolationsmaterial und Lack aufweist.

Die Figur zeigt zudem eine mittig angeordnete Materialaussparung 5 (zur Anbindung an die Welle, siehe FIG 2). Durch einen Mittelpunkt der Materialaussparung 5 führt die Rotationsachse R.

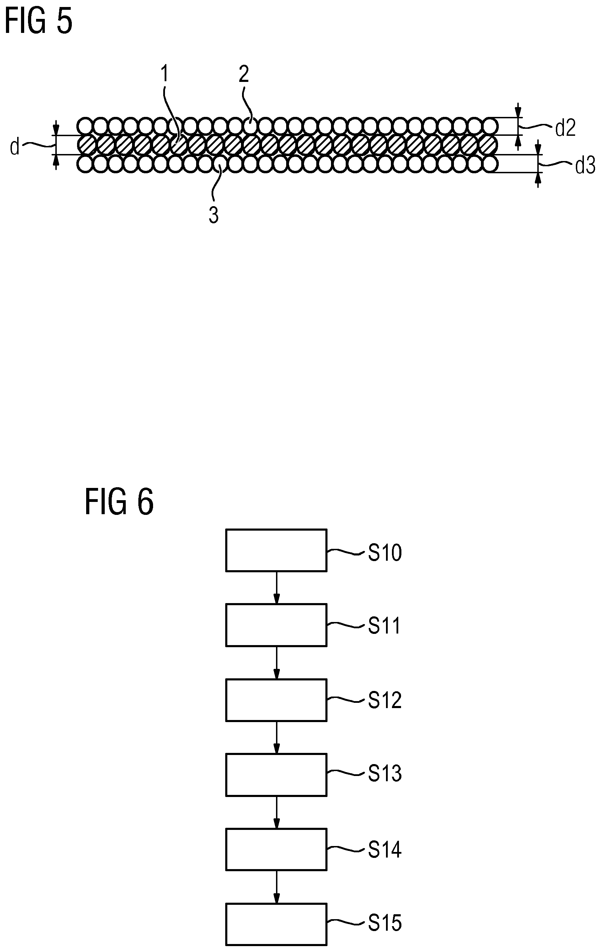

FIG 5 zeigt die Materiallage 1 in einer Seitenansicht.

Die Figur zeigt die dünnste Ausführung der Materiallage 1, da nur eine Schicht aus Festteilchen die Materiallage 1 bildet. Die Festteilchen sind in der Figur granulares Material. In anderen Worten: Die Festteilchen sind kleine Kügelchen, die nebeneinander liegen und, vorzugsweise durch die in FIG 3 beschriebene Sinterung, miteinander verbunden sind.

Die Lagendicke d entspricht in der Figur einem Durchmesser eines Festteilchens.

Ebenso zeigt die Figur nur eine Schicht des Isolationsmaterials 2 auf der oberen Lagenseite und nur eine Schicht des Isolationsmaterials 3 auf der unteren Lagenseite. Die Isolationsdicke d2 und die Isolationsdicke d3 entsprechen in der Figur einem Durchmesser eines Keramik-Festteilchens oder eines Lack-Festteilchens.

Es können jedoch auch zwei oder mehr Festteilchen übereinander die Materiallage 1 bilden. Es können auch zwei oder mehr Keramik-Festteilchen übereinander die Isolation bilden. Es können auch zwei oder mehr Lack-Festteilchen übereinander die Isolation bilden.

FIG 6 zeigt ein Verfahren zur Herstellung eines Materiallagengefüges für den Rotor der dynamoelektrischen rotatorischen Maschine.

In einem Verfahrensschritt S10 wird eine erste Materiallage additiv gefertigt (wie in FIG 3 beschrieben), wobei die erste Materiallage wenigstens eine Materialschicht umfasst.

In einem Verfahrensschritt S11 folgt ein Aufbringen eines Isolationsmaterials auf die erste Materiallage. Das Isolationsmaterial ist hierbei vorzugsweise Lack, insbesondere Backlack. Das Isolationsmaterial kann jedoch auch Keramik oder ein anderer Stoff sein.

In einem Verfahrensschritt S12 wird wenigstens eine weitere Materiallage additiv gefertigt, wobei die wenigstens eine weitere Materiallage wenigstens eine Materialschicht umfasst.

In einem Verfahrensschritt S13 folgt ein Aufbringen eines Isolationsmaterials auf die wenigstens eine weitere Materiallage.

In einem Verfahrensschritt S14 werden die erste und die wenigstens eine weitere Materiallage zusammengefügt.

In einem Verfahrensschritt S15 werden die Materiallagen gegenseitig verfestigt. Wurde Backlack auf die Materiallagen in den Verfahrensschritten S11 bzw. S13 aufgebracht, werden die Materiallagen durch Verbacken miteinander verfestigt.

Das Verfahren kann auch zur Herstellung eines Stator-Materiallagengefüges für den Stator der dynamoelektrischen rotatorischen Maschine verwendet werden.

## Patentansprüche

1. Leichtgewichtige dynamoelektrische rotatorische Maschine (15), aufweisend
- eine Leistung pro Masse von > 5 kW/kg,
- einen Wirkungsgrad von > 95%,
- einen Rotor (11) mit einer Mehrzahl an übereinander angeordneten Materiallagen (1), wobei die Mehrzahl an Materiallagen (1) eine Verlustleistung von < 11,5 W/kg aufweist, wobei die Materiallagen (1) jeweils eine Zugfestigkeit von > 600 MPa aufweisen, wobei die Materiallagen (1) jeweils eine Lagendicke (d) zwischen 0,5 und 500 µm aufweisen und mittels eines additiven Herstellungsverfahrens gefertigt sind.

2. Schnelllaufende dynamoelektrische rotatorische Maschine (15), aufweisend
- eine Leistung pro Masse von > 5 kW/kg,
- einen Rotor (11), wobei mit dem Rotor (11) eine Rotoroberflächengeschwindigkeit von > 150 m/s erreichbar ist und wobei der Rotor (11) eine Mehrzahl an übereinander angeordneten Materiallagen (1) aufweist, wobei die Materiallagen (1) jeweils eine Lagendicke (d) zwischen 0,5 und 500 µm aufweisen und mittels eines additiven Herstellungsverfahrens gefertigt sind.

3. Leichtgewichtige bzw. schnelllaufende dynamoelektrische rotatorische Maschine (15) nach einem der vorhergehenden Ansprüche, ausgeführt als dynamoelektrische rotatorische Reluktanzmaschine.

4. Leichtgewichtige bzw. schnelllaufende dynamoelektrische rotatorische Maschine (15) nach einem der vorhergehenden Ansprüche, wobei die Maschine (15) eine Leistung pro Masse von > 10 kW/kg aufweist.

5. Leichtgewichtige bzw. schnelllaufende dynamoelektrische rotatorische Maschine (15) nach einem der vorhergehenden Ansprüche, wobei die Materiallagen (1) eine Lagendicke (d) zwischen 10 und 100 µm aufweisen.

6. Leichtgewichtige bzw. schnelllaufende dynamoelektrische rotatorische Maschine (15) nach einem der vorhergehenden Ansprüche, wobei die Materiallagen (1) mittels Schablonendruck und Sinterung gefertigt sind.

7. Leichtgewichtige bzw. schnelllaufende dynamoelektrische rotatorische Maschine (15) nach einem der vorhergehenden Ansprüche, wobei die Materiallagen (1) auf wenigstens einer Lagenseite ein Isolationsmaterial aufweisen.

8. Leichtgewichtige bzw. schnelllaufende dynamoelektrische rotatorische Maschine (15) nach einem der vorhergehenden Ansprüche, wobei die Materiallagen (1) auf beiden Lagenseiten ein Isolationsmaterial aufweisen.

9. Leichtgewichtige bzw. schnelllaufende dynamoelektrische rotatorische Maschine (15) nach einem der vorhergehenden Ansprüche, wobei die Materiallagen (1) eine Lackierung aufweisen.

10. Leichtgewichtige bzw. schnelllaufende dynamoelektrische rotatorische Maschine (15) nach Anspruch 9, wobei die Materiallagen (1) als Lackierung Backlack (2,3) aufweisen.

11. Leichtgewichtige bzw. schnelllaufende dynamoelektrische rotatorische Maschine (15) nach einem der Ansprüche 9 oder 10, wobei eine Materiallage (1) mittels der Lackierung und/oder mittels des Isolationsmaterials mit wenigstens einer weiteren Materiallage (1) verfestigbar ist.

12. Leichtgewichtige bzw. schnelllaufende dynamoelektrische rotatorische Maschine (15) nach einem der vorhergehenden Ansprüche, wobei die Materiallagen (1) magnetisches Material aufweisen.

13. Leichtgewichtige bzw. schnelllaufende dynamoelektrische rotatorische Maschine (15) nach einem der vorhergehenden Ansprüche, wobei die Materiallagen (1) amorphes magnetisches und/oder anisotropes magnetisches Material aufweisen.

14. Leichtgewichtige bzw. schnelllaufende dynamoelektrische rotatorische Maschine (15) nach einem der vorhergehenden Ansprüche, wobei die Materiallagen (1) weichmagnetisches Material aufweisen.

15. Leichtgewichtige bzw. schnelllaufende dynamoelektrische rotatorische Maschine (15) nach einem der vorhergehenden Ansprüche, aufweisend einen Stator, wobei der Stator eine Mehrzahl an übereinander angeordneten Stator-Materiallagen (120) aufweist, wobei die Stator-Materiallagen (120) jeweils eine Lagendicke (dS) zwischen 0,5 und 500 µm aufweisen und mittels eines additiven Herstellungsverfahrens gefertigt sind.

16. Leichtgewichtige bzw. schnelllaufende dynamoelektrische rotatorische Maschine (15) nach Anspruch 15, wobei die Stator-Materiallagen (120) eine Zugfestigkeit und eine Verlustleistung aufweisen, wobei die Zugfestigkeit der Stator-Materiallagen (120) geringer ist als eine Zugfestigkeit von Rotor-Materiallagen (1), wobei die Verlustleistung der Mehrzahl an Stator-Materiallagen (120) geringer ist als eine Verlustleistung der Mehrzahl an Rotor-Materiallagen (1).
